# EUROPÄISCHE PATENTANMELDUNG

(11) **EP 1 671 760 A1**
(43) Veröffentlichungstag der Anmeldung: **21.06.2006**
(21) Anmeldenummer: 04030070.9
(22) Anmeldetag: 18.12.2004
(51) Int. Cl.: B25J 15/00

(54) **Modulares Gerüstsystem bestehend aus gebohrten Profilrohren**

(71) Anmelder: TÜNKERS MASCHINENBAU GmbH, 40880 Ratingen (DE)
(72) Erfinder: Tünkers, André, 40489 Düsseldorf (DE)
(74) Vertreter: Beyer, Rudi

(57) **Zusammenfassung**

Die Erfindung betrifft ein modulares Gerüstsystem, zur Verwendung im Karosseriebau der Kfz-Industrie. Es wird aufgezeigt, wie ein derartiges modulares Gerüstsystem aus Profilrohren mit hoher Präzision hergestellt werden kann.

Die Profilrohren (1) sind jeweils aus einem polygonförmigen Außenrohr und einem kreisförmigen Innenrohr (21) gebildet. Rippen (20,22,23,24) erstrecken sich radial zwischen dem Innenrohr und dem Außenrohr. Zentrierbohrungen (13,14) durchgreifen durch die obere Wand des Außenrohres, die Rippen und die untere Wand des Außenrohres.

## Beschreibung

Die Erfindung betrifft ein modulares Gerüstsystem, zur Verwendung im Karosseriebau der Kfz-Industrie, zum Anordnen von Kniehebelspannvorrichtungen, Saugvorrichtungen, Zentrierdornen, Sensoren, Schweißvorrichtungen, Clinchvorrichtungen, Nietvorrichtungen oder dergleichen, geeignet zum Anordnen in oder an einem Roboterarm, wobei das modulare Gerüstsystem aus zwei oder aus mehreren, in einem orthogonal zur ihrer Längsachse geführten Querschnitt an der Außenmantelfläche polygonförmigen, insbesondere quadratischen oder rechteckförmigen, Profilrohren bestehen (Außenrohre), die in ihrem Inneren jeweils ein koaxial angeordnetes und sich in ihrer Längsachse erstreckendes, an der Außenmantel- und Innenmantelfläche in einem orthogonal zu seiner Längsachse geführten Querschnitt kreisförmiges Innenrohr aufweisen, das über seinen Umfang auf diametral gegenüberliegenden Seiten jeweils materialmäßig einstückige, sich radial erstreckende und auf gegenüberliegenden Seiten durch ebene Oberflächen begrenzte Rippen aufweisen, die materialmäßig einstückig mit den Außenrohr verbunden sind.

### Stand der Technik

Ein modulares Gerüstsystem ist durch die DE 100 17 897 C2 vorbekannt. Derartige modulare Gerüstsysteme können erhebliche Abmessungen aufweisen und recht komplex gestaltet sein, um den Anforderungen im Karosseriebau der Kfz-Industrie gerecht zu werden. Rohre und Klemmschellen können aus Stahl, aber auch aus einer Aluminiumlegierung hergestellt sein. Je nach den jeweiligen Anforderungen, also Type und Formgebung der zu bearbeitenden Karosserieteile sind auch die Abmessungen solcher Gerüstsysteme und damit auch die Gewichts- und Massenkräfte ganz erheblich, zumal die Gerüstsysteme durch einen Roboterarm in unterschiedlichen Ebenen bewegt werden müssen. Die Abmessungen und insbesondere die Massenträgheitskräfte setzen damit der Geschwindigkeit, mit der die Gerüstsysteme durch den Roboterarm bewegt werden können, eine Grenze.

Klassischerweise werden untergeordnete Funktionen wie Bauteilabfragen oder Vakuumsauger an der herausgearbeiteten Rundgeometrie angebunden. Diese Funktionsbaugruppen basieren im Rundrohrsystem stets auf einem Durchmesser von 25 mm. Eine unmittelbare Anbindung auf 25 mm benötigt insgesamt weniger Bauraum (Vermeidung von Störkanten) und bietet Gewichtsvorteile in Form der Reduzierung der Komponentenanzahl sowie deren geringere Einzelgewichte.

Modulare Gerüstsysteme der vorausgesetzten Gattung mit Zentrierbohrungen bieten erhöhte Toleranzsicherheit. Die Verbindung zweier Profilenden erfolgt hier über Knotenbleche, welche über - in der Regel - vier Zentrierbohrungen am Profilende mit Hilfe von Zentrierbolzen am Profil befestigt und zentriert werden. Die Toleranz und Achsgenauigkeit der Bohrungen ist speziell im Falle des Austauschens von einzelnen Profilelementen entscheidend für die Maßhaltigeit des gesamten Greifersystems. Die bisherige Innengeometrie sorgt mit einem äußeren Durchmesser von 40 mm beim Einbringen der Zentrierbohrungen lokal für eine einseitige Belastung des Bohrers, wobei die Bohrungen verlaufen können. Bislang hat man keine Möglichkeit gesehen, diesen Nachteil abzustellen.

### Aufgabe

Der Erfindung liegt die Aufgabe zugrunde, ein modulares Gerüstsystem aus Profilrohren der vorausgesetzten Gattung zu schaffen, bei denen sich die Profilrohre und/oder die anzuordnenden Vorrichtungen mit deutlich erhöhter Präzision austauschbar miteinander verbinden lassen.

### Lösung der Aufgabe

Ausgehend von einem modularen Gerüstsystem der vorausgesetzten Gattung wird diese Aufgabe durch die in Patentanspruch 1 wiedergegebenen Merkmale gelöst.

### Einige Vorteile

Bei dem erfindungsgemäßen modularen Gerüstsystem besteht nicht mehr die Gefahr des Verlaufens von Bohrern oder Fräswerkzeugen, weil unter anderem die Geometrie des Innenrohrs mit seinen Rippen so gewählt ist, dass die spanabhebenden Werkzeuge (Bohrer, Fräser) mit Sicherheit nicht mehr mit der äußeren Peripherie des Innenrohrs in Berührung gelangen. Die radiale Erstreckung der einzelnen Rippen ist so gewählt, dass jede Zentrierbohrung mit deutlichem Abstand zur äußeren Peripherie des Innenrohrs die betreffende Rippe durchsetzt. Da es nicht mehr zu einem Verlaufen der Werkzeuge kommen kann, lassen sich auch die Zentrierbohrungen mit höherer Präzision an den Profilrohren herstellen.

Ein weiterer Vorteil besteht darin, dass bei gleichbleibenden äußeren Abmessungen des äußeren Profilrohrs (Außenrohr) es zu einer deutlicheren Gewichtsreduzierung kommt, wenn der Durchmesser des Innenrohrs z. B. auf 10 mm bis 30 mm, vorzugsweise auf 25 mm, reduziert wird. Mit der Reduzierung des Durchmessers des Innenrohrs wird somit die einseitige Belastung de Bohrers vermieden, was die Erhöhung der Toleranzsicherheit und eine Verringerung der Bearbeitungszeit zu Gute kommt. Auch die Masse des Profils verringert sich. Zum Beispiel kann ein Profilrohr nur 0,4 kg/m wiegen, wenn es aus einer Aluminiumlegierung gefertigt ist.

### Weitere erfinderische Ausgestaltung

Weitere erfinderische Ausgestaltungen sind in den **Patentansprüchen 2** und folgende beschrieben.

**Patentanspruch 2** beschreibt ein modulares Gerüstsystem, bei dem die Länge jeder Rippe, die das Innenrohr mit dem Außenrohr materialmäßig einstückig verbindet, so bemessen ist, dass auf diametral gegenüberliegenden Seiten der in dieser Rippe angebrachten Zentrierbohrung, die mit Bohrungen in den Wandungen des Außenrohrs koaxial angeordnet ist, etwa ein Abstand von 5 bis 35 %, vorzugsweise 10 bis 20 %, des Durchmessers der Zentrierbohrung vorhanden ist.

Bei der Ausführungsform gemäß **Patentanspruch 3** beträgt der Außendurchmesser des Innenrohrs 15 mm bis 30 mm, vorzugsweise 25 mm.

Das Außenrohr kann auf einem gewissen Längenabschnitt materialmäßig abgetragen, z. B. abgefräst oder abgedreht, sein, so dass das Innenrohr aus dem Außenrohr heraustritt. Man hat es dann in der Hand, auch an diesem im Querschnitt kreisrunden Innenrohr, z. B. durch Klemmschellen, Vorrichtungsteile, insbesondere Kniehebelspannvorrichtung, Zentriervorrichtung, Clinchvorrichtung oder dergleichen, anzuordnen. Derartige Vorrichtungen können dann sowohl in Umfangsrichtung des Innenrohrs als auch in dessen Längsachsrichtung innerhalb vorgeschriebener Grenzen stufenlos verstellbar und arretierbar sein, so dass sich derartige Vorrichtungen im Betrieb sehr feinfühlig auf die vorliegenden Betriebsbedingungen einstellen (justieren) lassen.

Bei der Ausführungsform gemäß **Patentanspruch 4** bestehen die Innen- und Außenrohre mit den sie verbindenden Rippen aus einer Aluminiumlegierung, während bei der Ausführungsform nach **Patentanspruch 5** diese Teile aus einem Faserverbundwerkstoff, insbesondere aus einem geeigneten Kohlefaserwerkstoff, bestehen. Dadurch lassen sich die Gewichts- und Massenträgheitskräft gegenüber vorbekannten Gerüstsystemen solcher Art ganz erheblich reduzieren, bei hoher Festigkeit derartiger modularer Gerüstsysteme.

In der Zeichnung ist die Erfindung - teils schematisch - beispielsweise veranschaulicht. Es zeigen:
- Fig. 1: Ein modulares Gerüstsystem mit verschiedenen Vorrichtungen, in perspektivischer Darstellung;
- Fig. 2: ein aus Innen- und Außenrohr bestehendes Profilrohr, verkürzt dargestellt, in perspektivischer Darstellung, und
- Fig. 3: eine Stirnansicht zu Fig. 2.

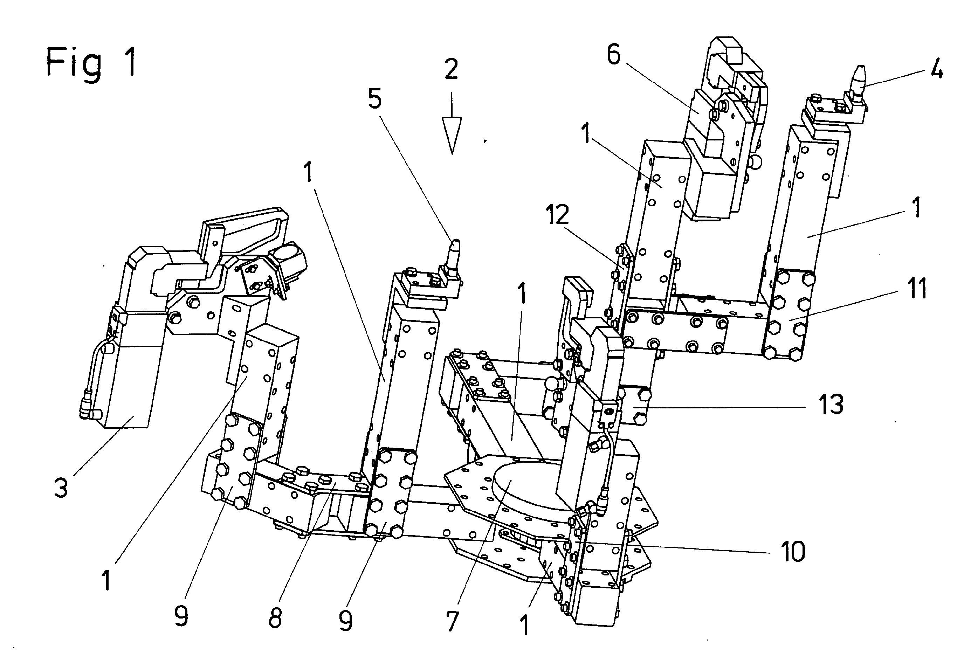

In der Zeichnung ist die Erfindung in Anwendung auf ein Gerüstsystem veranschaulicht, das modular aus Profilrohren aufgebaut ist, die im Raum in unterschiedlichen Winkeln und/oder Höhenlagen angeordnet sind. Lediglich einige dieser Profilrohre 1 wurden in Fig. 1 mit dem Bezugszeichen 1 versehen.

An dem Gerüstsystem, das in Fig. 1 insgesamt mit den Bezugszeichen 2 bezeichnet ist, können die unterschiedlichsten, insbesondere im Karosseriebau der Kfz-Industrie Verwendung findenden Vorrichtungen, wie z. B. Kniehebelspannvorrichtungen 3 oder Zentriervorrichtungen 4, 5 und Punktschweißvorrichtungen 6 mit Kniehebelgelenkantrieb, angeordnet sein. Die Anordnung und Anzahl der verschiedenen Vorrichtungen in Fig. 1 ist nicht abschließen, sondern wird vielmehr nach den jeweils vorliegenden Betriebsbedingungen gewählt, was auch für die Konfiguration des Gerüstsystems 2 selbst gilt, das in unterschiedlichen Höhen- und/oder Winkellagen mit einer unterschiedlichen Anzahl von Profilrohren 1 ausgerüstet sein kann.

Das Gerüstsystem 2 kann an einem Roboterarm (nicht dargestellt) angeordnet werden, der das Gerüstsystem 2 in die jeweilige Arbeitsstellung schwenkt und/oder dreht und auch wieder in eine Ruhestellung wegbewegt und dort arretiert.

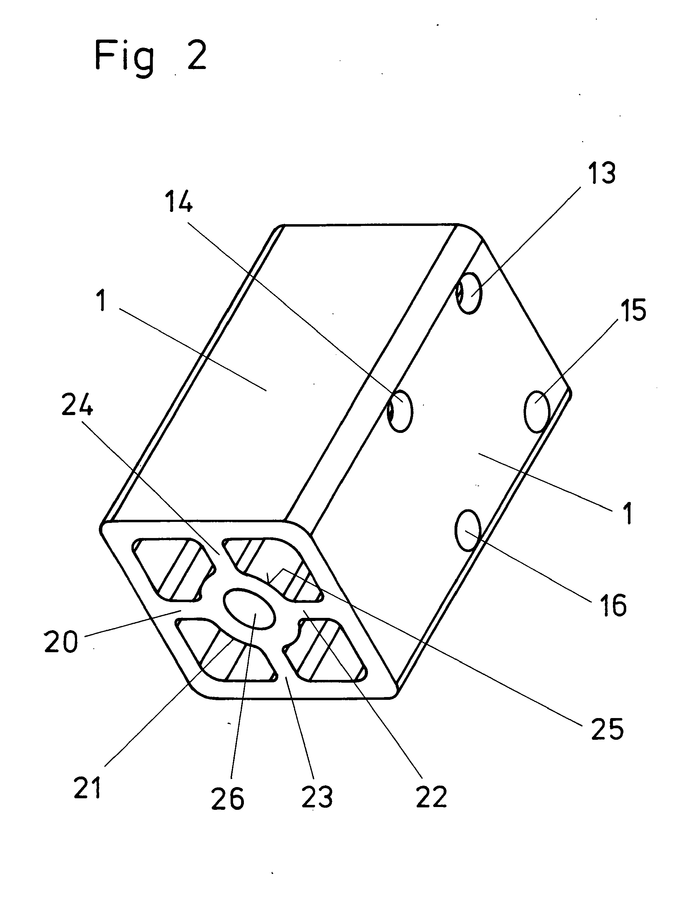

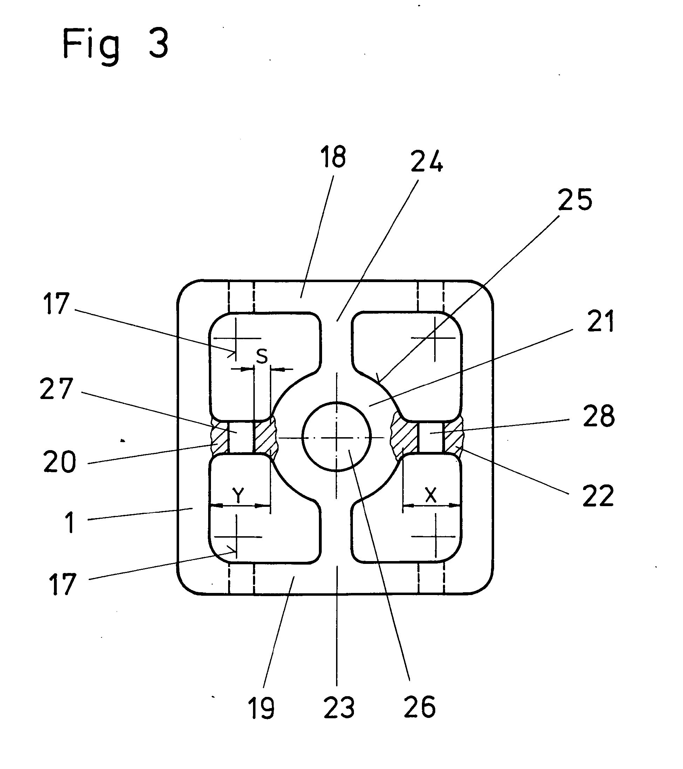

Die verschiedenen Profilrohre 1 können mit unterschiedlich gestalteten Knotenblechen miteinander verbunden sein, von denen einige dieser Bleche beispielsweise mit den Bezugszeichen 7, 8, 9, 10, 11 und 12 bezeichnet sind. Diese Knotenbleche 7 bis 12 besitzen Durchgangsbohrungen, durch die Zentrierbolzen hindurchgreifen, die wiederum in Zentrierbohrungen angeordnet sind, von denen in Fig. 2 Zentrierbohrungen mit den Bezugszeichen 13, 14, 15 und 16 bezeichnet sind. Diese Zentrierbohrungen 13 bis 14 durchgreifen das gesamte Profilrohr 1, treten also auch in der gegenüberliegenden Wand des betreffenden Profilrohrs 1 heraus, was in Fig. 3 durch als Kreuze eingezeichnete Mittellinien schematisch dargestellt ist, wobei lediglich zwei diametral gegenüberliegende Kreuze mit dem Bezugszeichen 17 bezeichnet sind. Die durch die in Fig. 3 obere Wand 18 eingebrachte Zentrierbohrung durchgreift somit auch die gegenüberliegende Wand 19 des ein Außenrohr bildenden Profilrohres 1 und durchgreift auch eine dazwischenliegende, radial verlaufende Rippe 20, so dass jede der Zentrierbohrungen 13, 14, 15 und 16 jeweils drei Wände, eben die Außenwand 18, die Rippe 20 und die gegenüberliegende Wand 19 durchdringt, wobei diese Bohrungen koaxial zueinander angeordnet sind. Das gilt für alle vier Bohrungen 13, 14, 15 und 16. Selbstverständlich ist die Anzahl der Bohrungen nicht auf vier beschränkt, sondern kann größer oder kleiner sein, als dies in der Zeichnung dargestellt ist, wenn dies die Betriebsbedingungen erfordern.

Das äußere Profilrohr 1 (Außenrohr) ist bei der aus Fig. 3 dargestellten Querschnittsform quadratisch mit außen abgerundeten Kantenbereichen ausgebildet, kann aber auch im Bedarfsfalle im Querschnitt rechteckförmig gestaltet sein.

Koaxial zu dem Außenrohr 1 ist ein Innenrohr 21 vorgesehen, das über insgesamt vier radial verlaufende und paarweise diametral gegenüberliegende Rippen 20, 22 bzw. 23, 24 materialmäßig einstückig mit dem Außenrohr 1 verbunden ist. Die Rippen 20 sowie 22 bis 24 gehen jeweils über Radien sowohl in die innenliegende Wand des Außenrohrs 1, als auch in die Peripherie 25 des Innenrohrs 21, über, um Spannungsanhäufungen zu vermeiden.

Das Innenrohr 21 kann sich über die gesamte Länge des Außenrohrs 1 erstrecken, was hier jedoch nicht unbedingt notwendig ist. Es ist auch möglich, das Außenrohr 1 gegenüber dem Innenrohr 21 zurücktreten zu lassen und das Innenrohr 21 auf seinem aus den Außenrohr 1 heraustretenden Längenabschnitt an seiner Peripherie 25 zylindrisch, als in einem orthogonal zur Längsachse des Innenrohr 1 geführten Querschnitts kreisrund auszugestalten.

Im Inneren des Innenrohrs 21 verläuft eine sich in dessen Längsachsrichtung erstreckende kreisrunde Öffnung 26. Das gesamte aus dem Außenrohr 1 und Innenrohr 21 sowie den Rippen 20 und 22 bis 24 bestehende Profilrohr kann i, Strangguss- oder Strangpressverfahren hergestellt sein, und z. B. aus einer Aluminiumlegierung, oder einer Magnesiumlegierung, oder aber aus Kohlefasern, bestehen.

Der Außendurchmesser des Innenrohrs 25 beträgt bei der dargestellten Ausführungsform 27 mm, kann selbstverständlich auch anders bemessen sein.

Die radiale Länge der Rippen, z. B. 20 und 22, ist mit Y bzw. X in Fig. 3 gekennzeichnet. X und Y sind vorzugsweise bei allen vier Rippen 20 sowie 22 bis 24 gleichgroß und so lang bemessen, dass die Zentrierbohrungen 27 bzw. 28, die die Rippen durchsetzen, in ihrem Durchmesser so bestimmt sind, dass die die Wände 18 und 19 koaxial durchsetzenden Bohrungen nicht nur jeweils mit diesen Zentrierbohrungen 27 und 28 fluchten, sondern auch die Herstellwerkzeuge, insbesondere Fräser oder Bohrer, nicht an der Peripherie 25 des Innenrohrs 21 angreifen und hier verlaufen können.

Selbstverständlich können die Bohrungen statt die Wände 18 und 19 des Außenrohrs 1 zu durchsetzen, auch die um 90° hier zu versetzenden anderen Wände des Außenrohrs 1 durchgreifen und dann koaxial durch die Rippen 23 und 24 verlaufen, wobei dort wiederum die Längen der Rippen 23 und 24 so bestimmt sind, dass die dort angeordneten Zentrierbohrungen in deutlichem Abstand S von der Peripherie 25 des Innenrohrs 21 angeordnet sind.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Literaturverzeichnis

- DE: 100 17 897 C2
- DE: 34 43 588 C2
- DE: 37 13 056 A1
- DE: 200 17 129 U1
- DE: 299 05 687 U1
- Prospektblatt: "DE-STA-CO"

### Bezugszeichenliste

- 1: Außenrohr
- 2: Gerüstsystem
- 3: Kniehebelspannvorrichtung
- 4: Zentriervorrichtung
- 5: "
- 6: Punktschweißvorrichtung
- 7: Knotenblech
- 8: "
- 9: "
- 10: "
- 11: "
- 12: "
- 13: Zentrierbohrung
- 14: "
- 15: "
- 16: "
- 17: Kreuz
- 18: Wand
- 19: Wand
- 20: Rippe
- 21: Innenrohr
- 22: Rippe
- 23: "
- 24: "
- 25: Peripherie
- 26: Öffnung
- 27: Zentrierbohrung
- 28: "

- S: Abstand der Bohrung von der Peripherie 25 des Innenrohrs 21
- X: Länge einer Rippe 20, 21, 22, 2
- Y: "

## Patentansprüche

1. Modulares Gerüstsystem (2), zur Verwendung im Karosseriebau der Kfz-Industrie, zum Anordnen von Kniehebelspannvorrichtungen, Saugvorrichtungen, Zentrierdornen, Sensoren, Schweißvorrichtungen, Clinchvorrichtungen, Nietvorrichtungen oder dergleichen, geeignet zum Anordnen in oder an einem Roboterarm, wobei das modulare Gerüstsystem (2) aus zwei oder aus mehreren, in einem orthogonal zur ihrer Längsachse geführten Querschnitt an der Außenmantelfläche polygonförmigen, insbesondere quadratischen oder rechteckförmigen, Profilrohren (1) besteht (Außenrohre), die in ihrem Inneren jeweils ein koaxial angeordnetes und sich in ihrer Längsachse erstreckendes, an der Außenmantel- und Innenmantelfläche in einem orthogonal zu seiner Längsachse geführten Querschnitt kreisförmiges Innenrohr (21) aufweisen, das über seinen Umfang auf diametral gegenüberliegenden Seiten jeweils materialmäßig einstückige, sich radial erstreckende und auf gegenüberliegenden Seiten durch ebene Oberflächen begrenzte Rippen (20, 22, 23, 24) aufweist, die materialmäßig einstückig mit dem Außenrohr (1) verbunden sind, wobei die Rippen (20, 22, 23, 24) eine größere zwischen der jeweilige Innenwand des Außenrohrs **(1)** und der gegenüberliegenden Peripherie (25) des Innenrohrs (21) bemessene Länge (Y) aufweisen als der Durchmesser der hier vorgesehenen Zentrierbohrung (27, 28), wobei die Profilrohre (1) Zentrierbohrungen (13, 14, 15, 16) aufweisen, die die Wände (18, 19) und die zugeordneten Rippen (20 bzw. 22) durchsetzen und durch Befestigungselemente (Schrauben oder dergleichen) über Knotenbleche (7, 8, 9, 10, 11, 12) und/oder mit den betreffenden Vorrichtungen austauschbar und hoch präzise miteinander verbunden sind.

2. Modulares Gerüstsystem nach Anspruch 1, **dadurch gekennzeichnet, dass** die Länge (Y) der Rippe (20, 22, 23, 24), die das Innenrohr (21) mit dem Außenrohr (1) materialmäßig einstückig verbindet, so bemessen ist, dass auf diametral gegenüberliegenden Seiten der in dieser Rippe (z. B. 20) angebrachten Zentrierbohrung (z. B. 27), die mit Bohrungen in den Wandungen (z. B. 18, 19) das Außenrohr (1) koaxial angeordnet ist, etwa ein Abstand von 5 % bis 35 %, vorzugsweise 10 % bis 20 %, des Durchmessers der betreffenden Zentrierbohrung (z. B. 27), vorhanden ist.

3. Modulares Gerüstsystem nach Anspruch 1 oder 2, **dadurch gekennzeichnet, dass** der Außendurchmessers des Innenrohres (21) 15 mm bis 50 mm, vorzugsweise 25 mm bis 40 mm, beträgt.

4. Modulares Gerüstsystem nach Anspruch 1 oder einem der darauffolgenden Ansprüche, **dadurch gekennzeichnet, dass** das Außenrohr (1) und dass Innenrohr (21) sowie die Rippen (20, 22, 23, 24) materialmäßig einstückig aus einer Aluminiumlegierung bestehen.

5. Modulares Gerüstsystem nach Anspruch 1 oder einem der darauffolgenden Ansprüche, **dadurch gekennzeichnet, dass** das Außenrohr (1) und dass Innenrohr (21) sowie die Rippen (20, 22, 23, 24) materialmäßig einstückig aus einem Faserverbundwerkstoff, insbesondere aus einem geeigneten Kohlefaserwerkstoff, bestehen.

## Geänderte Patentansprüche

### Geänderte Patentansprüche gemäss Regel 86(2) EPÜ.

**1.** Modulares Gerüstsystem (2), zur Verwendung im Karosseriebau der Kfz-Industrie, wobei das modulare Gerüstsystem (2) aus zwei oder aus mehreren, in einem orthogonal zur Längsachse geführten Querschnitt an der Außenmantelfläche polygonförmigen, insbesondere quadratischen oder rechteckförmigen, Profilrohren (1) besteht (Außenrohre), die in ihrem Inneren auf diametral gegenüberliegenden Seiten sich radial erstreckende und auf gegenüberliegenden Seiten durch ebene Oberflächen begrenzte einstückige Rippen (20, 22, 23, 24) aufweisen, die materialmäßig einstückig mit dem Außenrohr (1) verbunden sind, wobei die Rippen (20, 22, 23, 24) eine größere zwischen der jeweiligen Innenwand des Außenrohrs (1) und der gegenüberliegenden Außenfläche eines im Innern des Außenrohres (1) angeordneten und sich in dessen Längsachsrichtung erstreckenden Körpers bemessene Länge (Y) aufweisen, als der Durchmesser der hier vorgesehenen Zentrierbohrung (27, 28), wobei die Außenrohre (1) Zentrierbohrungen (13, 14, 15, 16) aufweisen, die die Wände (18, 19) und die zugeordneten Rippen (20, 22) durchsetzen und durch Befestigungselemente mit Vorrichtungen austauschbar und/oder hochpräzise miteinander verbunden sind, **dadurch gekennzeichnet, dass** sich die Rippen (20, 22, 23, 24) zwischen der Innenseite des Außenrohrs (1) und eines im Außenrohr (1) koaxial angeordneten und sich in dessen Längsachse erstreckenden, an der Außen- und Innenmantelfläche in orthogonal zu seiner Längsachse geführten Querschnitten kreisförmigen Innenrohr (21) erstrecken und dass die Rippen (20, 22, 23, 24) auf gegenüberliegenden Seiten durch ebene Oberflächen begrenzt sind, wobei die Rippen (20, 22, 23, 24) eine größere zwischen der jeweiligen Innenwand des Außenrohrs (1) und der gegenüberliegenden Peripherie (25) des Innenrohrs (21) bemessene Länge (Y) aufweisen, als der Durchmesser der hier vorgesehenen Zentrierbohrung (27, 28), und dass das modulare Gerüstsystem (2) zur Verwendung im Karosseriebau der Kfz-Industrie zum Anordnen von Kniehebelspannvorrichtungen, Saugvorrichtungen, Zentrierdornen, Sensoren, Schweißvorrichtungen, Clinchvorrichtungen, Nietvorrichtungen oder dergleichen, dient.

**2.** Modulares Gerüstsystem nach Anspruch 1, **dadurch gekennzeichnet, dass** die Länge (Y) der Rippe (20, 22, 23, 24), die das Innenrohr (21) mit dem Außenrohr (1) materialmäßig einstückig verbindet, so bemessen ist, dass auf diametral gegenüberliegenden Seiten der in dieser Rippe (z. B. 20) angebrachten Zentrierbohrung (z. B. 27), die mit Bohrungen in den Wandungen (z. B. 18, 19) das Außenrohr (1) koaxial angeordnet ist, etwa ein Abstand von 5 % bis 35 %, vorzugsweise 10 % bis 20 %, des Durchmessers der betreffenden Zentrierbohrung (z. B. 27), vorhanden ist.

**3.** Modulares Gerüstsystem nach Anspruch 1 oder 2, **dadurch gekennzeichnet, dass** der Außendurchmessers des Innenrohres (21) 15 mm bis 30 mm, vorzugsweise 25 mm, beträgt.

**4.** Modulares Gerüstsystem nach Anspruch 1 oder einem der darauffolgenden Ansprüche, **dadurch gekennzeichnet, dass** das Außenrohr (1) und dass Innenrohr (21) sowie die Rippen (20, 22, 23, 24) materialmäßig einstückig aus einer Aluminiumlegierung bestehen.

**5.** Modulares Gerüstsystem nach Anspruch 1 oder einem der darauffolgenden Ansprüche, **dadurch gekennzeichnet, dass** das Außenrohr (1) und dass Innenrohr (21) sowie die Rippen (20, 22, 23, 24) materialmäßig einstückig aus einem Faserverbundwerkstoff, insbesondere aus einem geeigneten Kohlefaserwerkstoff, bestehen.
